(19) Europäisches Patentamt
European Patent Office
Office européen des brevets

(11) **EP 4 098 773 A1**

(12) **EUROPÄISCHE PATENTANMELDUNG**

(43) Veröffentlichungstag:
**07.12.2022  Patentblatt 2022/49**

(21) Anmeldenummer: **21176920.3**

(22) Anmeldetag: **31.05.2021**

(51) Internationale Patentklassifikation (IPC):
**C25B 9/23** (2021.01)     **C25B 9/75** (2021.01)
**C25B 11/032** (2021.01)    **H01M 8/0232** (2016.01)
**H01M 8/0254** (2016.01)    **H01M 8/0258** (2016.01)
**H01M 8/1018** (2016.01)

(52) Gemeinsame Patentklassifikation (CPC):
**H01M 8/0232; C25B 1/04; C25B 9/60; C25B 9/75;
C25B 9/77; C25B 11/032; H01M 8/0254;
H01M 8/0258;** H01M 2008/1095

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Energy Global GmbH & Co.
KG**
**81739 München (DE)**

(72) Erfinder:
• **Kießlich, Simon**
  **91052 Erlangen (DE)**
• **Spies, Alexander**
  **95478 Kemnath (DE)**

(54) **GASDIFFUSIONSSCHICHT FÜR EINE ELEKTROCHEMISCHE ZELLE UND ELEKTROCHEMISCHE ZELLE**

(57) Die Erfindung betrifft eine Gasdiffusionsschicht (50) für eine elektrochemische Zelle (90) aufweisend eine Kontaktierungseinheit (10) und eine Metalleinheit (12), welche an oder auf der Kontaktierungseinheit (10) angeordnet ist. Die Metalleinheit (12) weist bezüglich zu einer ebenen Grundfläche (30) mit vorgegebener Dicke (d) mehrere Erhebungen (14) im Wesentlichen senkrecht zu der Grundfläche (30) auf. An wenigstens einer Seitenfläche (15) oder Oberfläche (13) der mehreren Erhebungen (14) der Metalleinheit (12) ist mindestens eine Öffnung (16) gebildet. Dabei beträgt eine jeweilige Ausdehnung (18) der mehreren Erhebungen (14) mindestens ein Dreifaches der Dicke (d) der Metalleinheit (12).

FIG 1

**Beschreibung**

Die Erfindung betrifft eine Gasdiffusionsschicht für eine elektrochemische Zelle sowie eine elektrochemische Zelle. Die elektrochemische Zelle kann zum Beispiel eine Brennstoffzelle oder Elektrolysezelle sein.

Bei Elektrolysezellen, wie zum Beispiel einer PEM-Elektrolysezelle, kommen häufig Gasdiffusionsschichten im Zellinneren zum Einsatz. Die Gasdiffusionsschicht erfüllt dabei verschiedene Aufgaben. Zum einen soll eine elektrische Kontaktierung einer Membran zu einer Bipolarplatte ermöglicht werden. Des Weiteren sollen entstandene Prozessmedien, wie zum Beispiel Wasserstoff oder Sauerstoff, zuverlässig abgeleitet werden. Anderes Prozessmedien, wie zum Beispiel Wasser, sollen zugleich zugeführt werden. Deshalb muss eine Gasdiffusionsschicht neben einer gewissen Porosität auch mechanische, elektrische und topologische Eigenschaften aufweisen, welche die vorgenannten Aufgaben erfüllen können.

Derzeitige Gasdiffusionsschichten sind zwar vorhanden, jedoch meist sehr kostenintensiv. Bei Sinterscheiben ist beispielsweise meist eine graduierte Oberfläche nötig. Dazu werden häufig Pulver miteinander verpresst, gesintert und/oder miteinander verschmolzen. Damit wird versucht, eine Größe oder Eigenschaft der Sinterscheibe für die Gasdiffusionsschicht optimal einzustellen. Häufig ist eine aufwändige thermische Behandlung nötig, um eine geeignete Gasdiffusionsschicht herzustellen. Aufgrund dieses Aufwands besteht ein Bedürfnis nach einer effizienteren und vor allem kostengünstigeren Herstellung einer Gasdiffusionsschicht. Derzeitige Elektrolysezellen sind noch nicht für einen größeren Maßstab ausgelegt. Damit ist insbesondere gemeint, dass solche Elektrolysezellen Leistungen im Kilowatt- oder Megawattbereich erbringen sollen. Gerade bei Elektrolysezellen, welche zum Beispiel für den Flugverkehr geeignet sein sollen, ergibt sich rasch eine entsprechende Dimensionierung solcher Elektrolysezellen. Gerade im Hochleistungsbereich rückt der Aspekt der Wirtschaftlichkeit bei Elektrolysezellen in den Vordergrund. Um auch solche Elektrolysezellen, insbesondere PEM-Elektrolysezellen (PEM = Proton-Exchange-Membrane) sinnvoll betreiben zu können, muss der Anschaffungspreis pro Kilowatt Leistung deutlich fallen. Dazu ist es erforderlich, bei allen nötigen Bauteilen nach einem Kostenreduzierungspotential Ausschau zu halten. Mit den derzeit vorhandenen Strukturen ist dies kaum möglich.

Die Patentschrift EP 3 140 434 B1 beschreibt eine Gasdiffusionsschicht und eine elektrochemische Zelle mit einer solchen Gasdiffusionsschicht. Die Gasdiffusionsschicht dient zum Anbringen zwischen einer Bipolarplatte und einer Elektrode einer elektrochemischen Zelle. Mindestens zwei übereinander geschichtete Lagen sind dabei als eine progressive Federkennlinie ausgebildet. Zwar kann mit einer derartigen Gasdiffusionsschicht eine kontrollierte Strömung von Prozessmedien ermöglicht werden, jedoch gelingt es damit nicht in ausreichendem Maße, eine Wirtschaftlichkeit von Elektrolysezellen zu verbessern.

Die Offenlegungsschrift DE 10 2017 130 489 A1 betrifft eine Bipolarplatte für eine Brennstoffzelle. Die Brennstoffzelle beinhaltet eine gewellte Platte mit einem Lochmuster, bestehend aus mindestens einer ersten Lochreihe, sowie eine zweite Platte, die an der gewellten Platte abdichtend angeordnet ist. Die gewellte Platte ist aus einem Metallblech ausgebildet und weist eine regelmäßige Wellenform aus ansteigenden und abfallenden Wellen auf. Hinsichtlich einer Gasdiffusionsschicht werden keine spezifischen Angaben gemacht. Die Gasdiffusionsschicht ist als einfache rechteckige Schicht dargestellt.

Eine Aufgabe der Erfindung kann darin gesehen werden, Komponenten für elektrochemische Zellen wirtschaftlicher herzustellen. Insbesondere sollen leistungsfähige elektrochemische Zellen günstiger hergestellt werden können beziehungsweise deren Wirtschaftlichkeit erhöht werden.

Diese Problematik geht diese Erfindung mit den unabhängigen Ansprüchen dieser Anmeldung an. Alternative und sinnvolle Ausführungsformen sind in den Unteransprüchen, der Beschreibung sowie den Figuren angegeben.

Die Erfindung sieht eine Gasdiffusionsschicht für eine elektrochemische Zelle vor, die eine Kontaktierungseinheit und eine Metalleinheit aufweist. Die Metalleinheit ist an oder auf der Kontaktierungseinheit angeordnet. Insbesondere kann die Metalleinheit unmittelbar an oder auf der Kontaktierungseinheit angeordnet sein. Die Metalleinheit weist bezüglich zu einer ebenen Grundfläche mit vorgegebener Dicke mehrere Erhebungen im Wesentlichen senkrecht zu der Grundfläche auf. Die ebene Grundfläche kann Teil der Metalleinheit sein. Die Metalleinheit kann somit aus der ebenen Grundfläche gebildet sein. Die Metalleinheit kann ein gestanztes und/oder geprägtes Blech sein.

Jedoch ist auch möglich, dass die ebene Grundfläche eine projizierte Ebene entlang einer normalen Richtung darstellt. Bei einer gewellten, v-förmigen oder w-förmigen Metallplatte kann zum Beispiel eine ebene Auflagefläche, wie zum Beispiel eine ebene Tischfläche, die ebene Grundfläche repräsentieren. In einem solchen Fall ist die ebene Grundfläche nicht Teil der Metalleinheit. Bevorzugt ist die ebene Grundfläche Teil der Metalleinheit. Die Metalleinheit kann somit die ebene Grundfläche beinhalten beziehungsweise weist die ebene Grundfläche auf.

Die Metalleinheit beinhaltet insbesondere bezüglich der ebenen Grundfläche mit vorgegebener Dicke mehrere Erhebungen im Wesentlichen senkrecht zu der Grundfläche. Dabei kann der Begriff "im Wesentlichen senkrecht" bedeuten, dass auch Abweichungen von 90 Grad möglich sind. "Im Wesentlichen senkrecht" kann insbesondere einen Winkel von 75 bis 110° von der jeweiligen Erhebung zu der Grundfläche umfassen.

An wenigstens einer Seitenfläche oder Oberfläche der mehreren Erhebungen der Metalleinheit ist mindestens eine Öffnung ausgebildet. Dabei beträgt eine jeweilige Ausdehnung der mehreren Erhebungen insbesondere mindestens ein Dreifaches der Dicke der Metalleinheit. Die jeweilige Ausdehnung der mehreren Erhebungen senkrecht zu der Metalleinheit oder senkrecht zu der ebenen Grundfläche beträgt mindestens ein Dreifaches der Dicke der Metalleinheit. Diese jeweilige Ausdehnung ist bevorzugt ein senkrechter Abstand, senkrechte Strecke, senkrechte Höhe oder ein senkrechtes Maß der Erhebung zu der Grundfläche oder der Metalleinheit. Die Erhebung kann ferner eine Längsausdehnung und eine Querausdehnung aufweisen. Die Längsausdehnung ist insbesondere eine Erstreckung der Erhebung parallel zur Grundfläche. Die Querausdehnung ist insbesondere ebenfalls eine Erstreckung der Erhebung parallel zur Grundfläche, jedoch zur Längsausdehnung senkrecht ausgebildet. Die jeweilige Ausdehnung der mehreren Erhebungen ist bevorzugt ein senkrechter Abstand der Erhebung zur ebenen Grundfläche der Metalleinheit beziehungsweise ein senkrechtes herausragendes Maß der jeweiligen Erhebung aus der ebenen Grundfläche der Metalleinheit.

Die Öffnung kann eine Bohrung oder ein Loch sein. Die Öffnung kann als Ausnehmung ausgebildet sein, welche einen Gasdurchtritt durch die Metalleinheit ermöglicht. Insbesondere kann die Öffnung oder die mehreren Öffnungen einen Gastransport von einer ersten Seite der Metalleinheit zu einer gegenüberliegenden zweiten Seite der Metalleinheit erlauben. Die jeweilige Ausdehnung der mehreren Erhebungen kann ein Vierfaches, Fünffaches, Sechsfaches, Siebenfaches, Achtfaches, Neunfaches oder mehr als ein Zehnfaches der Dicke der Metalleinheit betragen. Die Dicke der Metalleinheit bezieht sich bevorzugt auf die ebene Grundfläche der Metalleinheit.

Die Metalleinheit kann als Metallblech ausgebildet sein. Insbesondere kann die Metalleinheit als Halbzeug ausgebildet sein. Ein Halbzeug kann insbesondere ein Vormaterial bedeuten, was ein vorgefertigtes Rohmaterial, Werkstück oder Halbfabrikat sein kann. Einfache Profile, Stangen, Rohre, Platten oder Metallbleche können als Halbzeug aufgefasst werden. Solche Halbzeug-Varianten können jeweils als Metalleinheit ausgebildet sein. Die Metalleinheit kann beispielsweise ein Blech mit einer Dicke von 1 bis 5 mm sein.

Die Öffnungen resultieren insbesondere aufgrund der mindestens einen Erhebung. Dabei kann die Öffnung an einer Seitenfläche dieser Erhebung und/oder an einer Frontfläche dieser Erhebung angeordnet sein. Damit kann eine Durchlässigkeit normal zur Blechebene beeinflusst werden. Bevorzugt wird ein Blech als Metalleinheit eingesetzt, da dies besonders kostengünstig ist. Die mindestens eine Erhebung ist bevorzugt eine Schlitzbrückenlochung. Ein Metallblech mit Schlitzbrückenlochung kann zum Beispiel durch einen Stanzprozess gewonnen werden. Die Kontaktierungsschicht wird insbesondere auf der Seite der Metalleinheit angeordnet, welche von den Erhebungen abgewandt ist. So kann kostengünstig eine Gasdiffusionsschicht für eine elektrochemische Zelle geschaffen werden.

Eine zusätzliche oder alternative Ausführungsform sieht vor, dass eine Anordnung der mehreren Erhebungen und deren jeweilige Ausdehnungen so bestimmt sind, dass die Metalleinheit zusammen mit der Kontaktierungseinheit eine Federkomponente bilden, welche eine degressive Federkennlinie aufweist. Die Anordnung der mehreren Erhebungen und deren jeweilige Ausdehnungen können insbesondere eine Anzahl und Position der dazugehörigen Öffnungen umfassen. Insbesondere werden die Erhebungen durch die Öffnungen nicht von der Metalleinheit getrennt. So können die Erhebungen beispielsweise zylinderförmig, dreieckförmig oder quaderförmig sein. Auch eine Mischung unterschiedlicher, geometrischer Formen hinsichtlich der Erhebungen ist möglich. Die jeweilige Anordnung und Ausdehnung der Erhebungen inklusive der dazugehörigen Öffnungen können mithilfe eines Finite-Elemente-Verfahrens im Vorfeld ermittelt werden. Hierbei hat sich die Schlitzbrückenlochung als besonders effizient erwiesen. Zugleich kann die Schlitzbrückenlochung kostengünstig hergestellt werden. Die Schlitzbrückenlochung kann sich insbesondere durch eine längliche Erhebung auszeichnen. Sie kann als alternierendes Reißverschlussmuster beschrieben werden. Jede Schlitzbrücke hebt sich dabei von einer Grundfläche des Metallblechs ab. Zugleich ist im Bereich der Schlitzbrückenlochung eine Öffnung vorhanden, die einen Gastransport durch die Metalleinheit ermöglicht. Bevorzugt können die Anordnung und die jeweilige Ausdehnung der Erhebungen so bestimmt sein, dass bei einer Herstellung der Gasdiffusionsschicht möglichst wenig Verschnitt an der Metalleinheit entsteht. Daher wird bevorzugt ein Stanzprozess eingesetzt, da hier kein Verschnitt entsteht.

Eine zusätzliche oder alternative Ausführungsform betrifft eine Gasdiffusionsschicht, wobei alle jeweiligen Erhebungen im Wesentlichen dieselbe Ausdehnung haben. "Im Wesentlichen dieselbe Ausdehnung" kann insbesondere bedeuten, dass die kleinste Erhebung sich um höchstens 10 % von der größten Erhebung unterscheidet. Hierbei wird bevorzugt die jeweils größte Erhebung als Bezugsgröße verwendet. Zugleich ist hier bevorzugt vorgesehen, dass die jeweiligen Erhebungen gleichartig, regelmäßig und/oder homogen angeordnet sind. Die Anordnung der mehreren Erhebungen entspricht somit insbesondere einem regelmäßigen Muster. Dies ist besonders von Vorteil, da solche Erhebungen mittels einfacher Fertigungsprozesse, wie zum Beispiel Stanzprozesse, umsetzbar sind. Eine gestanzte Metallplatte oder ein gestanztes Metallblech kann so zu einer Metalleinheit mit regelmäßigen Erhebungen umgeformt werden. Die so geformten Erhebungen entsprechen insbesondere einem verwendeten Stanzprofil einer Stanzmaschine. So kann besonders einfach eine entsprechende Metalleinheit geschaffen werden.

Eine zusätzliche oder alternative Ausführungsform sieht vor, dass eine Anordnung und/oder Ausdehnung der Erhebungen betreffend einen Abstand der Erhebungen zueinander, eine Beschaffenheit der Erhebung, die Ausdehnung der Erhebung in Abhängigkeit von einem vorgegebenen Parameter der Gasdiffusionsschicht, insbesondere einer Zelldicke und/oder eines Anpressdrucks der Gasdiffusionsschicht, bestimmt ist. Die Ausdehnung der Erhebung kann als eine Höhe der Erhebung angesehen werden. Durch eine entsprechend höhere Erhebung kann eine Zelldicke der Gasdiffusionsschicht eingestellt werden. Ebenso können ein Anpressdruck sowie eine Verteilung des Anpressdrucks durch die Anordnung und/oder Ausdehnungen der Erhebungen eingestellt werden. Bevorzugt werden die Erhebungen hinsichtlich ihrer Anordnung und/oder Ausdehnungen so bestimmt, dass sich ein homogener Anpressdruck in der Gasdiffusionsschicht ergibt. Durch eine Anpassung der Geometrie in Bezug auf den Abstand und die Beschaffenheit der Erhebungen können unterschiedliche Zelldicken sowie eine Homogenität des Anpressdrucks auch bei geringem Niveau des Anpressdrucks zielsicher eingestellt werden. Ebenso kann eine Porosität der Gasdiffusionsschicht und somit der Stofftransport beeinflusst werden. Somit kann mit Hilfe des Stanzprozesses auf einfache und gezielte Weise auf wichtige Parameter, wie etwa die Homogenität des Anpressdrucks, die Porosität sowie die Zelldicke der Gasdiffusionsschicht, Einfluss genommen werden. Bei einer Ermittlung der Anordnung und Ausdehnungen der mehreren Erhebungen kann eine Simulation oder ein Finite-Elemente-Verfahren zum Einsatz kommen. Mit einfachen und kostengünstigen Methoden kann so eine kostengünstigere und dennoch effiziente Gasdiffusionsschicht geschaffen werden.

Eine zusätzliche oder alternative Ausführungsform sieht vor, dass die mehreren Erhebungen und die Metalleinheiten monolithisch sind. Die mehreren Erhebungen sind insbesondere keine separaten Komponenten. Sie sind bevorzugt aus demselben Material gefertigt wie die Metalleinheit. Die mehreren Erhebungen und die Metalleinheit bilden somit insbesondere eine einheitliche oder einteilige Komponente. Die mehreren Erhebungen und die Metalleinheit können somit als eine einheitliche Komponente oder einheitliches Bauteil betrachtet werden. Auch wenn Öffnungen an einer Oberfläche oder der Seitenfläche der Erhebungen angeordnet sind, so können die mehreren Erhebungen und die Metalleinheit dennoch monolithisch ausgebildet sein. Sie sind in diesem Fall aus demselben Material beziehungsweise bestehen aus demselben Material. Somit kann eine einheitliche Metalleinheit inklusive der dazugehörigen Erhebungen geschaffen werden.

Eine zusätzliche oder alternative Ausführungsform sieht vor, dass die Kontaktierungseinheit als ein Vlies, Metallgewebe und/oder Karbonpapier ausgebildet ist und/oder die Metalleinheit als Blech, Metallschaum, Metallgewebe, Lochblech und/oder Schlitzbrückenblech ausgebildet ist. Die Kontaktierungseinheit dient insbesondere zur gleichmäßigen Kontaktierung der Gasdiffusionsschicht an weitere Komponenten einer elektrochemischen Zelle. Dies kann zum Beispiel eine Elektrode, eine Bipolarplatte oder eine Membran sein. Die Metalleinheit in Form des Blechs kann mehrere Löcher aufweisen. Bevorzugt ist die Metalleinheit eine Metallplatte mit einer Schlitzbrückenlochung. Mittels einer Schlitzbrückenlochung kann einfach und effektiv eine Porosität der Metalleinheit vergrößert werden. Die Porosität kann insbesondere ein Quotient aus der senkrechten Ausdehnung der Erhebung zur Metalleinheit zu einer Gesamtausdehnung der Metalleinheit in senkrechter Richtung sein. Weist beispielsweise eine 1 mm dicke Metallplatte eine dazu senkrechte Erhebung um weitere 4 mm auf, so ergäbe sich in diesem Fall für die Porosität P = 4 mm

$$/\ 5\ \mathrm{mm} = 0{,}8\ \triangleq\ 80\ \%.$$ Ein derartig gestanztes Metallblech entspricht einer Porosität von 80% im Sinne dieser Anmeldung. Mit Hilfe von einer Schlitzbrückenlochung kann besonders einfach und kostengünstig die Porosität der Metalleinheit eingestellt werden. So kann kostengünstig ein Bauteil für elektrochemische Zellen hergestellt werden.

Eine zusätzliche oder alternative Ausführungsform sieht vor, dass die Metalleinheit eine Porosität von mindestens 80 % aufweist, welche durch die mehreren Erhebungen der Metalleinheit gebildet ist. Eine höhere Porosität kann zum Beispiel durch eine größere Ausdehnung der Erhebungen senkrecht zur Metalleinheit erreicht werden. So können durch entsprechend tieferes Stanzen größere Erhebungen erzeugt werden. Somit kann die Porosität der Metalleinheit und somit der Gasdiffusionsschicht erhöht werden.

Die Erfindung betrifft ebenfalls eine elektrochemische Zelle mit einer Gasdiffusionsschicht. Die elektrochemische Zelle kann dazu eine Bipolarplatte und eine Elektrode aufweisen. Dabei ist die Gasdiffusionsschicht auf einer ersten Seite mit der Bipolarplatte und auf einer gegenüberliegenden zweiten Seite mit der Elektrode kontaktiert. Die Elektrode kann wiederum mit einer Membran kontaktiert sein. Demnach kann die elektrochemische Zelle eine Membran aufweisen. Die elektrochemische Zelle kann als eine Elektrolysezelle oder als eine Brennstoffzelle ausgebildet sein. Aufgrund der einfach herzustellenden Gasdiffusionsschicht kann so eine kostengünstige und zugleich effiziente elektrochemische Zelle geschaffen werden.

Eine zusätzliche oder alternative Ausführungsform sieht vor, dass die Gasdiffusionsschicht mit der Bipolarplatte und/oder der Elektrode kraftschlüssig, formschlüssig und/oder stoffschlüssig verbunden ist. Somit kann die Gasdiffusionsschicht mit der Bipolarplatte und mit der Elektrode in verschiedenster Weise damit verbunden sein. Die Art der Verbindung kann kraftschlüssig, formschlüssig und/oder stoffschlüssig sein. Eine kraftschlüssige Verbindung kann sich beispielsweise durch ein Aufeinanderlegen und Verpressen der jeweiligen Schichten ergeben. Die formschlüssige Verbindung kann sich zum Beispiel durch ein Ummanteln mit einem Metallgewebe und einem anschließenden Verpressen ergeben. Eine stoffschlüssige Verbindung kann durch ein Verschweißen der jeweiligen Komponenten erzeugt werden. Die genannten Verbindungsarten können auch zwischen der Gasdiffusionsschicht und der Membran vorhanden sein. Da die beschriebene Gasdiffusionsschicht deutlich leichter und kostengünstiger herzustellen ist, wirkt sich dieser Vorteil dementsprechend auf die elektrochemische Zelle aus. So kann eine im Vergleich zu früher deutlich kostengünstigere elektrochemische Zelle geschaffen werden. Dies kann bei der Umsetzung der Energiewende hilfreich sein.

Die Erfindung wird nun anhand beigefügter Zeichnungen näher erläutert. Die Zeichnungen repräsentieren dabei beispielhafte Ausführungsformen der Erfindung. Die Erfindung ist jedoch nicht auf die in den Figuren gezeigten Ausführungsbeispiele beschränkt. Dabei zeigt:

FIG 1: eine schematische Ansicht einer Gasdiffusionsschicht mit Metalleinheit und Kontaktierungskomponente im Querschnitt;

FIG 2: eine beispielhafte degressive Federkennlinie für die Gasdiffusionsschicht;

FIG 3: eine beispielhafte Metalleinheit mit einer Schlitzbrückenlochung;

FIG 4: ein abgekantetes Lochblech als Metalleinheit;

FIG 5: in schematischer Darstellung eine elektrochemische Zelle zusammen mit der Gasdiffusionsschicht.

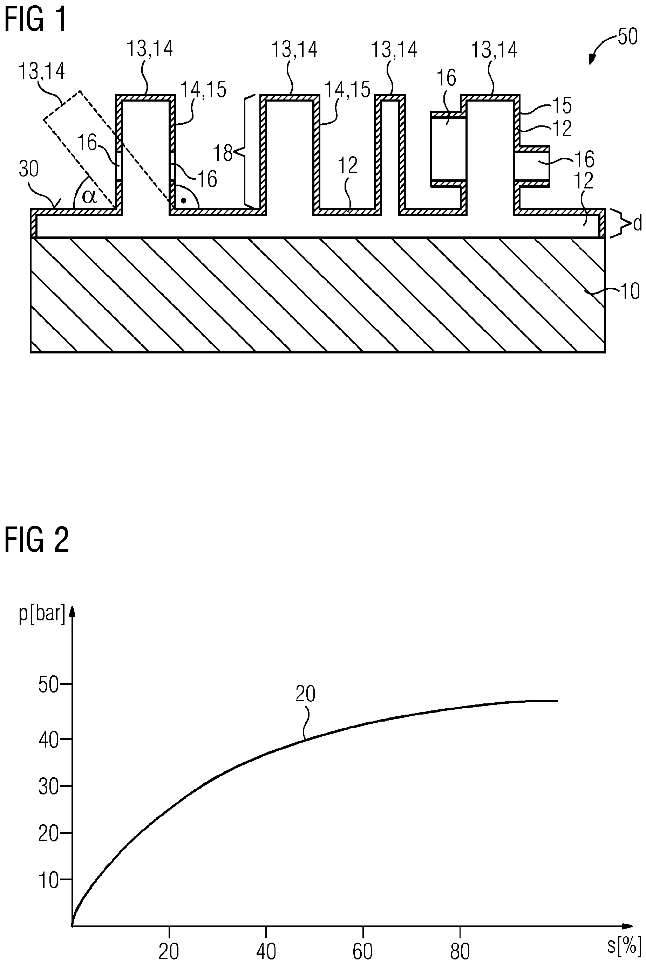

In FIG 1 ist eine beispielhafte Gasdiffusionsschicht 50 im Querschnitt gezeigt. Dabei sind mehrere Komponenten der Gasdiffusionsschicht 50 zu erkennen. Im unteren Bereich ist die Kontaktierungseinheit 10 zu erkennen. Oberhalb dieser Kontaktierungseinheit 10 schließt sich die Metalleinheit 12 mit einer dazugehörigen ebenen Grundfläche 30 an. Die Metalleinheit 12 weist dabei eine Dicke d auf.

In FIG 1 sind senkrechte Erhebungen 14 aus der Metalleinheit 12 zu erkennen. Diese Erhebungen 14 weisen jeweils Seitenflächen 15 und Oberflächen 13 auf. Im Bereich der Seitenflächen 15 und Oberflächen 13 sind bevorzugt Öffnungen 16 vorhanden oder angeordnet. Eine jeweilige Ausdehnung 18 dieser Erhebungen 14 sind größer als die Dicke d der Metalleinheit 12. Die Ausdehnung 18 kann die Dicke d der Metalleinheit 12 mindestens um ein Dreifaches, Vierfaches, Fünffaches, Sechsfaches, Siebenfaches, Achtfaches, Neunfaches sowie Zehnfaches übersteigen.

Im Beispiel der FIG 1 sind die mehreren Erhebungen 14 säulenförmig ausgebildet. Die Erhebungen 14 können jedoch auch einen Winkel α zur Grundfläche 30 der Metalleinheit 12 ausbilden. Insbesondere kann dabei ein schräger Winkel α eingenommen werden. Im linken Bereich der FIG 1 ist gestrichelt eine schräge Erhebung 14 angedeutet. Bevorzugt jedoch kommen senkrechte Erhebungen 14 zum Einsatz. Senkrecht kann dabei auch "im Wesentlichen senkrecht" bedeuten, was wiederum einen Winkel von 75 bis 110° umfassen kann. In FIG 1 ist ein schräger Winkel α angedeutet. Bevorzugt entspricht dieser schräge Winkel jedoch einem senkrechten Lot, was in FIG 1 bei der linken Erhebung 14 angedeutet ist.

Dabei kann eine Erhebung 14 eine oder mehrere Öffnungen 16 aufweisen. Diese Öffnungen 16 befinden sich insbesondere an den Seitenflächen 15 der Erhebungen 14 und/oder an der Oberfläche 13 der Erhebungen 14. Ebenso ist es möglich, dass alle Erhebungen 14 Öffnungen 16 aufweisen. Die Öffnungen 16 sind bevorzugt an jeweiligen Seitenflächen 15 der Erhebungen 14 angeordnet. Die Öffnungen 16 können jedoch auch an der Oberfläche 13 der Erhebung 14 angeordnet sein. Die Oberfläche 13 der jeweiligen Erhebung 14 ist der Metalleinheit 12 insbesondere abgewandt. Die Öffnungen 16, die in der FIG 1 zu sehen sind, sind jeweils an den Seitenflächen 15 der Erhebungen 14 angeordnet. In senkrechter Richtung zur Grundfläche 30 der Metalleinheit 12 schließt sich die Oberfläche 13 der Erhebung 14 an.

Ein Kerngedanke dieser Erfindung ist die Verwendung einer Struktur, bei der Brücken, Stege, Halbkreise oder ähnliche Erhebungen in einem Fertigungsschritt aus dem Blech gestanzt und geprägt werden. Dabei werden diese Erhebungen bevorzugt nicht von dem Blech 12 getrennt. Somit können die in FIG 1 gezeigten Erhebungen 14 als Brücken, Stege, Halbkreise oder ähnliche Erhebungen ausgeprägt sein. Die Öffnungen 16 ermöglichen einen Stoff- oder Gastransport von einer Seite des Blechs 12 zu einer gegenüberliegenden Seite des Blechs 12. Die erste Seite der Metalleinheit 12 ist in FIG 1 auf dem Kontaktierungselement 10 angeordnet.

Die zweite Seite der Metalleinheit 12 beinhaltet die mehreren Erhebungen 14. Die in FIG 1 gezeigte Gasdiffusionsschicht 50 entsteht insbesondere durch einen Stanzprozess. Dabei entsteht kein Verschnitt, was zu entsprechenden Kostenvorteilen führen kann. Bevorzugt kommt eine Schlitzbrückenlochung zum Einsatz. Die Form und Anordnung der mehreren Erhebungen 14 kann auch durch eine Nasenlochung oder Schlitzbogenlochung geschaffen werden. Dabei kann eine poröse und elektrisch leitende Schicht mit einem mechanischen Federhalten erzeugt werden.

Durch eine Anpassung der Geometrie in Bezug auf den Abstand und die Beschaffenheit der Erhebungen 14 können unterschiedliche Zelldicken sowie eine Homogenität des Anpressdrucks auch bei einem geringen Niveau dessen zielsicher eingestellt werden. Dadurch können die Porosität der Metalleinheit 12 beziehungsweise der Gasdiffusionsschicht 50 und somit die Möglichkeit des Stofftransports einfach und gezielt beeinflusst werden. Bei einem veränderten Druckniveau im Bereich der Gasdiffusionsschicht 50 können sich dadurch größere oder kleinere Gasblasen ergeben. Die Porosität der Metalleinheit 12 sowie der Gasdiffusionsschicht 50 kann insbesondere in Abhängigkeit von vorgegebenen Druckverhältnissen in elektrochemischen Zellen abhängig sein. Somit kann eine Ausdehnung, Anordnung und/oder Form der mehreren Erhebungen 14 in Abhängigkeit von einem Betriebsdruck einer elektrochemischen Zelle 90 abhängig sein.

Bei einem klassischen Lochblech als Metalleinheit 12 ist ein Stofftransport normal zur Blechebene bereits möglich. Um eine entsprechende Porosität des Lochblechs herzustellen, wird das Lochblech geprägt beziehungsweise tiefgezogen, ohne dabei die Struktur des Lochblechs zu trennen. So kann eine Porosität hinsichtlich des Transports der Prozessmedien parallel zur Blechebene ermöglicht werden. Dies ist beispielsweise durch regelmäßiges gegenseitiges Abkanten oder durch eine wellenförmige Prägung des Blechs möglich. Ein solcher Prozess kann gewählt werden, wenn Stanzen nicht zum Einsatz kommen soll oder kann.

Eine Verwendung der in der FIG 1 beschriebenen Struktur als Gasdiffusionsschicht 50 oder Gasdiffusionselektrode ist denkbar, wahrscheinlicher ist jedoch die Verwendung dieser Strukturen als Federschicht eines Gasdiffusionsschichtverbundbauteils.

FIG 2 zeigt in diesem Zusammenhang beispielhaft eine degressive Federkennlinie 20. Die Gasdiffusionsschicht 50 weist insbesondere die Eigenschaft der degressiven Federkennlinie 20 auf. Auf einer x-Achse ist mit s ein Federweg und auf der y-Achse ist mit p ein Druck gekennzeichnet. Man erkennt deutlich, dass bei einem zunehmenden Druck p sich der Federweg s kaum noch verändert. Die Gasdiffusionsschicht 50 weist bevorzugt ein Federverhalten auf, welches der degressiven Federkennlinie 20 entspricht. Dies bedeutet insbesondere, dass bei zunehmenden Druckverhältnissen p die Gasdiffusionsschicht 50 weicher wird. Die degressive Federkennlinie 20 bezieht sich dabei insbesondere auf die Metalleinheit 12. In diesem Fall kann die Metalleinheit 12 auch als Federschicht bezeichnet werden. Dabei kann die Federschicht mit der dazugehörigen Porosität mit einem Vlies kombiniert werden.

Das Vlies ist insbesondere die Kontaktierungseinheit 10. Die Kontaktierungseinheit 10 kann als Vlies, Karbonpapier, Metallschaum, Lochblech, Metallgewebe und/oder als fein ausführbare Struktur zur Kontaktierung der Elektrode oder Membran ausgeführt sein. Diese genannten Kontaktstrukturen können in einer elektrochemischen Zelle 90 kraftschlüssig, formschlüssig und/oder stoffschlüssig mit der Metalleinheit 12 verbunden sein. Somit kann die Kontaktierungseinheit 10 kraftschlüssig, formschlüssig und/oder stoffschlüssig mit der Metalleinheit 12 verbunden sein. Dasselbe kann für eine Verbindung der Gasdiffusionsschicht 50 mit weiteren Komponenten der elektrochemischen Zelle 90, wie zum Beispiel der Bipolarplatte oder der Elektrode oder der Membran gelten. Die elektrochemische Zelle 90 kann eine Brennstoffzelle 90 oder eine Elektrolysezelle 90 sein.

Aufgrund der vereinfachten Struktur der Gasdiffusionsschicht 50 ergeben sich bei deren jeweiliger Herstellung Kostenvorteile aufgrund geringerer Anzahl von Prozessschritten. Ein Streckblechverbund aus vielen Lagen muss beispielsweise in vielen Schritten verbunden werden. Somit kann sich eine Anzahl von Prozessschritten bei einer in FIG 1 beispielhaft gezeigten Gasdiffusionsschicht 50 deutlich reduzieren.

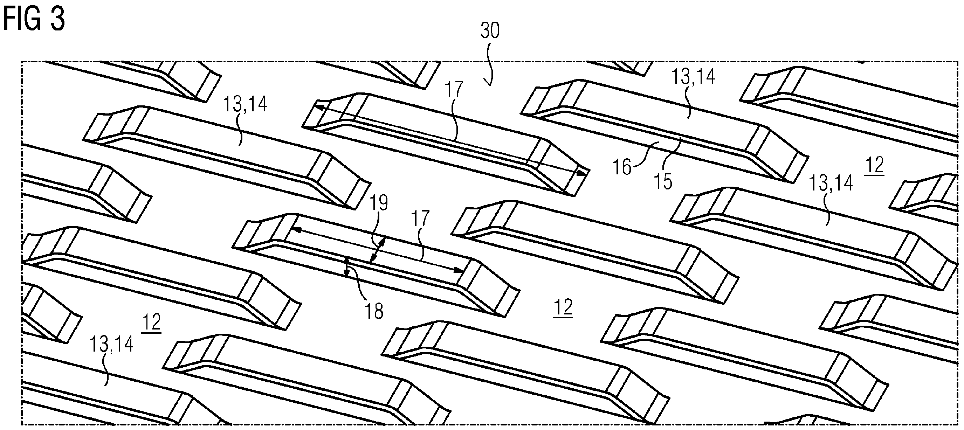

FIG 3 zeigt beispielhaft eine Metalleinheit 12 mit einer Schlitzbrückenlochung. Deutlich erkennbar sind die mehreren Erhebungen 14, die von der Grundfläche 30 senkrecht herausragen. Die senkrechten Erhebungen 14 weisen auf der Oberfläche 13 eine Längsausdehnung 17 sowie eine Querausdehnung 19 auf. Im Beispiel der FIG 3 ist die Längsausdehnung 17 größer als die Querausdehnung 19. Im Beispiel der Schlitzbrückenlochung von FIG 3 kann Längsausdehnung 17 eine maximale Längsausdehnung und/oder eine Länge bei entsprechender Ausdehnung der Erhebung 18 bedeuten. Die Ausdehnung 18 der mehreren Erhebungen 14 bezeichnet ein Maß für die senkrechte Erhebung 14. Zugleich sind im Bereich der Seitenflächen 15 der mehreren Erhebungen 14 jeweils Öffnungen 16 angeordnet. Diese Öffnungen 16 sind jedoch in FIG 3 schlecht zu erkennen. Sie sind dennoch vorhanden.

Die in FIG 3 gezeigten mehreren Erhebungen 14 stellen eine Art Reißverschlussmuster dar. Grundsätzlich können sich die mehreren Erhebungen 14 voneinander hinsichtlich ihrer Anordnung, Größe und/oder Ausdehnung unterscheiden. Bevorzugt wird jedoch eine einheitliche oder homogene Struktur hinsichtlich der mehreren Erhebungen 14 gewählt, um so möglichst kostengünstig eine effiziente Gasdiffusionsschicht 50 zu erzeugen.

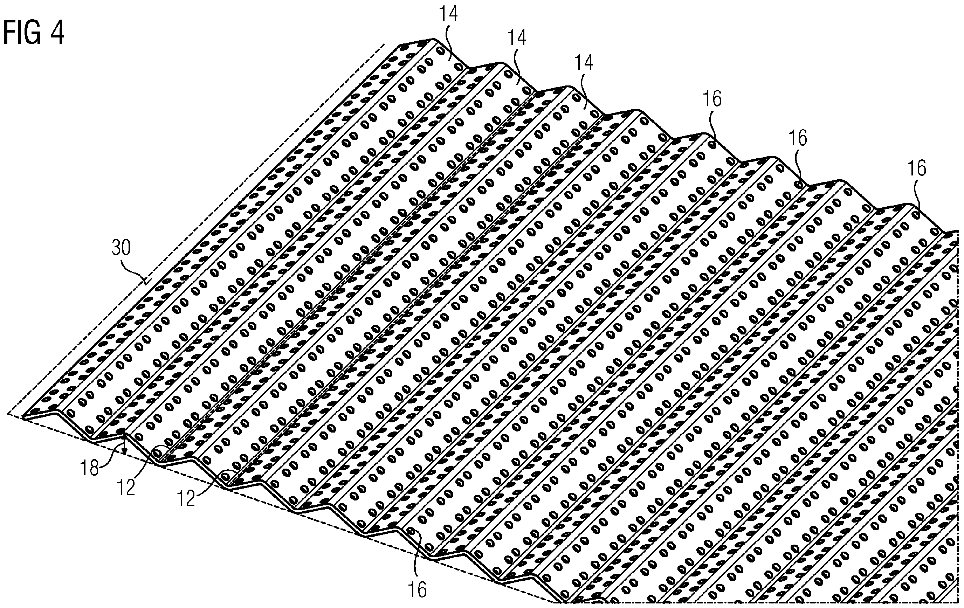

Eine alternative Ausführungsform für die Metalleinheit 12 der Gasdiffusionsschicht 50 zeigt die FIG 4. Hier ist die Metalleinheit 12 als ein abgekantetes Lochblech ausgebildet. Die ebene Grundfläche 30 ist in FIG 4 de facto nicht mehr vorhanden. Das abgekantete Lochblech resultiert aus einer Verformung einer ebenen Metallplatte 12 als imaginäre Grundfläche 30 für das Beispiel in FIG 4. Diese zuvor ebene Metallplatte 12 ist in FIG 4 schematisch angedeutet. Aufgrund dieser Verformung ergibt sich im Fall von FIG 4 ein V-förmiges oder wellenartiges Muster bezüglich der Metallplatte 12. Das in FIG 4 gezeigte abgekantete Lochblech 12 kann durch ein sich wiederholendes V-Profil beschrieben werden.

Jene V-Kanten, welche im unteren Bereich an der angedeuteten Grundfläche 30 angeordnet sind, entsprechen der Metalleinheit 12. Dies ist durch eine gestrichelte Linie in FIG 4 angedeutet. Die Metalleinheit 12 besteht im Fall von FIG 4 aus mehreren zueinander parallelen Linien. Der Rest des abgekanteten Lochblechs entspricht dabei den mehreren Erhebungen 14. Das Beispiel in FIG 4 ist ein Extremfall der FIG 3. Die Metalleinheit 12 beinhaltet im Beispiel von FIG 4 lediglich mehrere Linien, welche zum ursprünglich ebenen Lochblech Kontakt haben. Der Rest des abgekanteten Lochblechs repräsentiert im Fall von FIG 4 die mehreren Erhebungen 14.

Bevorzugt beträgt eine Höhe dieser mehreren Erhebungen 14 (V-förmige Erhebung) mindestens ein Dreifaches einer Dicke des ursprünglichen Lochblechs. Jener Bereich des abgekanteten Lochblechs, der sich von der ursprünglichen Ebene des Lochblechs abhebt, kann somit zur Erhebung 14 gerechnet werden. Hierbei kann vorgesehen sein, dass ein Mindestmaß an Erhebung 14 vorhanden sein muss, um eine einfachere oder bessere Zuordnung des abgekanteten Lochblechs zur Erhebung 14 oder zur Metalleinheit 12 zu ermöglichen. Wie in FIG 4 deutlich zu erkennen ist, beinhalten die V-Profile, also die mehreren Erhebungen 14, zahlreiche Öffnungen 16. Dadurch kann ein entsprechender Gasaustausch ermöglicht werden.

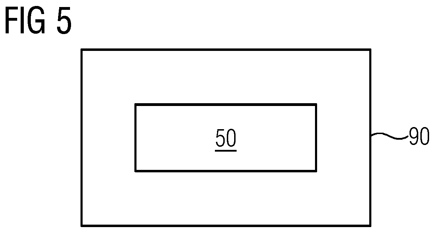

In FIG 5 ist beispielhaft und in schematischer Darstellung die elektrochemische Zelle 90 zusammen mit der Gasdiffusionsschicht 50 gezeigt. Die elektrochemische Zelle 90 kann als Brennstoffzelle 90 oder als Elektrolysezelle 90 ausgebildet sein. Durch die hier dargestellte Gasdiffusionsschicht 50 können geringe spezifische Kosten pro Quadratmeter im Vergleich zu bisherigen Produkten bei gleicher Funktion erreicht werden. Dies resultiert insbesondere aus einer einfacheren Fertigung beziehungsweise einer Kombination einfacher Einzelteile. Zugleich ermöglicht die Gasdiffusionsschicht 50 eine einfache Anpassung an technische Bedürfnisse neuer Zellgenerationen. Dies kann durch einfache entsprechende Geometrieanpassungen erfolgen. Je nach Anforderung kann beispielsweise ein entsprechendes neues Stanzprofil für eine neue Geometrie gewählt werden. Dieses neue Stanzprofil kann entsprechend bei einem Fertigungsprozess zur Produktion entsprechender angepasster Metalleinheiten 12 eingesetzt werden. Das Herstellen beziehungsweise Anwenden der hier dargestellten Metalleinheiten 12 ist auch für große Zellflächen im Quadratmeterbereich leicht umsetzbar. Dabei kann ein verbessertes Toleranzausgleichsvermögen erreicht werden. Ebenso ergibt sich die Möglichkeit der Anwendung von elasto-plastischem Federverhalten bei der Gasdiffusionsschicht 50 oder der elektrochemischen Zelle 90.

**Patentansprüche**

1. Gasdiffusionsschicht (50) für eine elektrochemische Zelle (90) aufweisend

   - eine Kontaktierungseinheit (10) und
   - eine Metalleinheit (12), welche an oder auf der Kontaktierungseinheit (10) angeordnet ist, wobei
   - die Metalleinheit (12) bezüglich zu einer ebenen Grundfläche (30) mit vorgegebener Dicke (d) mehrere Erhebungen (14) im Wesentlichen senkrecht zu der Grundfläche (30) aufweist,
   - an wenigstens einer Seitenfläche (15) oder Oberfläche (13) der mehreren Erhebungen (14) der Metalleinheit (12) mindestens eine Öffnung (16) gebildet ist und

   eine jeweilige Ausdehnung (18) der mehreren Erhebungen (14) senkrecht zu der Metalleinheit (12) oder senkrecht zu der ebenen Grundfläche (30) mindestens ein Dreifaches der Dicke (d) der Metalleinheit (12) beträgt.

2. Gasdiffusionsschicht (50) nach Anspruch 1, wobei eine Anordnung der mehreren Erhebungen (14) und deren jeweiligen Ausdehnungen (18) so bestimmt sind, dass die Metalleinheit (12) zusammen mit der Kontaktierungseinheit (10) eine Federkomponente bilden, welche eine degressive Federkennlinie (20) aufweist.

3. Gasdiffusionsschicht (50) nach einem der vorhergehenden Ansprüche, wobei alle jeweiligen Erhebungen (14) im Wesentlichen dieselbe Ausdehnung (18) haben.

4. Gasdiffusionsschicht (50) nach einem der vorhergehenden Ansprüche, wobei eine Anordnung und/oder Ausdehnung der Erhebungen (14) betreffend einen Abstand der Erhebungen (14) zueinander, eine Beschaffenheit der Erhebung (14), die Ausdehnung (18) der Erhebung (18) in Abhängigkeit von einem vorgegebenen Parameter der Gasdiffusionsschicht (50), insbesondere einer Zelldicke und/oder Anpressdrucks der Gasdiffusionsschicht (50) bestimmt ist.

5. Gasdiffusionsschicht (50) nach einem der vorhergehenden Ansprüche, wobei die mehreren Erhebungen (14) und die Metalleinheit (12) monolithisch sind.

6. Gasdiffusionsschicht (50) nach einem der vorhergehenden Ansprüche, wobei die Kontaktierungseinheit (10) als ein Vlies ausgebildet ist und/oder die Metalleinheit (12) als Blech, Metallschaum, Metallgewebe, Lochblech und/oder Schlitzbrückenblech ausgebildet ist.

7. Gasdiffusionsschicht (50) nach einem der vorhergehenden Ansprüche, wobei die Metalleinheit (12) eine Metallplatte mit einer Schlitzbrückenlochung ist.

8. Gasdiffusionsschicht (50) nach einem der vorhergehenden Ansprüche, wobei die Metalleinheit (12) eine Porosität von mindestens 80 % aufweist, welche durch die mehreren Erhebungen (14) der Metalleinheit (12) gebildet ist.

9.  Elektrochemische Zelle (90) mit einer Gasdiffusionsschicht (50) nach einem der vorhergehenden Ansprüche ferner aufweisend:

    - eine Bipolarplatte,
    - eine Elektrode, wobei die Gasdiffusionsschicht (50) auf einer ersten Seite mit der Bipolarplatte und auf einer gegenüberliegenden zweiten Seite mit der Elektrode kontaktiert ist.

10. Elektrochemische Zelle (90) nach Anspruch 9, wobei die Gasdiffusionsschicht (50) mit der Bipolarplatte und/oder der Elektrode kraftschlüssig, formschlüssig und/oder stoffschlüssig verbunden ist.

## FIG 1

## FIG 2

FIG 3

EP 4 098 773 A1

FIG 4

EP 4 098 773 A1

FIG 5

50

90

Europäisches
Patentamt

European
Patent Office

Office européen
des brevets

## EUROPÄISCHER RECHERCHENBERICHT

**Nummer der Anmeldung**

EP 21 17 6920

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2017 130489 A1 (SCHAEFFLER TECHNOLOGIES AG [DE]) 2. August 2018 (2018-08-02) | 1,3-6, 8-10 | INV. C25B9/23 C25B9/75 |
| A | * das ganze Dokument * * Absatz [0004] * * Absatz [0006] * ----- | 2,7 | C25B11/032 H01M8/0232 H01M8/0254 H01M8/0258 |
| X,D | EP 3 140 434 B1 (SIEMENS AG [DE]) 31. Juli 2019 (2019-07-31) | 1-4,6, 8-10 | |
| A | * Ansprüche 1-13 * * Abbildung 9 * * Absatz [0012] - Absatz [0016] * ----- | 5,7 | ADD. H01M8/1018 |

**RECHERCHIERTE SACHGEBIETE (IPC)**

C25B
H01M

Der vorliegende Recherchenbericht wurde für alle Patentansprüche erstellt

| Recherchenort | Abschlußdatum der Recherche | Prüfer |
|---|---|---|
| München | 17. November 2021 | Kuhn, Tanja |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 17 6920

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2021

| Im Recherchenbericht angeführtes Patentdokument | Datum der Veröffentlichung | Mitglied(er) der Patentfamilie | Datum der Veröffentlichung |
|---|---|---|---|
| DE 102017130489 A1 | 02-08-2018 | CN 110121807 A | 13-08-2019 |
| | | DE 102017130489 A1 | 02-08-2018 |
| | | EP 3577708 A1 | 11-12-2019 |
| | | JP 6931055 B2 | 01-09-2021 |
| | | JP 2019536240 A | 12-12-2019 |
| | | US 2020313202 A1 | 01-10-2020 |
| | | WO 2018141319 A1 | 09-08-2018 |
| EP 3140434 B1 | 31-07-2019 | CA 2952396 A1 | 23-12-2015 |
| | | CN 106460204 A | 22-02-2017 |
| | | DK 2957659 T3 | 06-05-2019 |
| | | DK 3140434 T3 | 07-10-2019 |
| | | EP 2957659 A1 | 23-12-2015 |
| | | EP 3140434 A1 | 15-03-2017 |
| | | ES 2727129 T3 | 14-10-2019 |
| | | ES 2754249 T3 | 16-04-2020 |
| | | JP 6381683 B2 | 29-08-2018 |
| | | JP 2017526808 A | 14-09-2017 |
| | | KR 20170007804 A | 20-01-2017 |
| | | PT 2957659 T | 31-05-2019 |
| | | PT 3140434 T | 14-10-2019 |
| | | RU 2652637 C1 | 28-04-2018 |
| | | US 2017191175 A1 | 06-07-2017 |
| | | WO 2015193211 A1 | 23-12-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3140434 B1
- DE 102017130489 A1